# EUROPÄISCHE PATENTSCHRIFT

(11) **EP 2 270 381 B1**
(45) Veröffentlichungstag und Bekanntmachung des Hinweises auf die Patenterteilung: **02.11.2011**
(21) Anmeldenummer: 10009860.7
(22) Anmeldetag: 30.09.2005
(51) Int. Cl.: F16L 23/08, F16L 23/20

(54) **Dichtring für eine Verbindung zweier Rohre**
Connection of two pipes and sealing ring for the connection
Raccordement de deux conduits et bague d'étanchéité pour le raccordement

(30) Priorität: 15.10.2004 DE 102004050302
(43) Veröffentlichungstag der Anmeldung: 05.01.2011
(62) Teilanmeldung aus: 05021453.5
(73) Patentinhaber: NORMA Germany GmbH, 63477 Maintal (DE)
(72) Erfinder: Hartig, Günther, Berwick, Vic 3806 (AU); Williams, Steve, Freeland Witney Oxon OX29 8QP (GB)
(74) Vertreter: Knoblauch, Andreas

(56) Entgegenhaltungen:
- US-A- 805 645
- US-A- 3 633 928

## Beschreibung

Die Erfindung,betrifft einen Dichtring für eine Verbindung zweier Rohre, von denen ein erstes Rohr einen ersten Flansch und ein zweites Rohr einen zweiten Flansch aufweist, mit einer die Flansche übergreifenden, spannbaren Schelle, die konische Seitenwände aufweist, durch die die Flansche beim Spannen der Schelle axial zueinander hin gedrückt werden, wobei der Dichtring zwischen den Flanschen angeordnet wird, wobei der Dichtring einem Randabschnitt aufweist, der auf einen Teil des übrigen Dichtringabschnitts zurückgebogen ist, und wodei der übrige Dichtringabschnitt wenigstens eine über die Dicke des umgebogenen Randabschnitts im ungespannten Zustand der Schelle hinausragende Sicke aufweist.

Eine bekannte Verbindung zweier Rohre ist in dem Prospekt Nr. 6 "NORMA® PROFILSCHELLEN KEGELFLANSCHVERBIN-DUNGEN", September 1987, Seite 6, linke Spalte, oberstes Bild, schematisch als Ausschnitt dargestellt. Bei dieser Verbindung berühren sich die freien Enden beider Flansche, wobei sie zusammen mit dem ersten Rohr, an dem der erste Flansch angeschweißt ist, einen Ringraum begrenzen. Wenn die zu verbindenden Rohre Teile einer Abgasrohrleitung eines Kraftfahrzeugs sind, strömen sehr heiße Abgase mit einer Temperatur von etwa 900 bis 1000°C hindurch. Dadurch werden die Rohre sehr stark erhitzt, so dass sie sich radial stärker als die Schelle ausdehnen (aufweiten), die einer geringeren Temperatur ausgesetzt ist, weil sie radial außen liegt und somit überdehnt werden und reißen kann.

Ein Dichtring ist aus US 3 633 928 A bekannt. Beim Spannen der Verbindung wird der Dichtring, der mit seinen Umfangs-Schmalseiten am Grund von Nuten anliegt, axial komprimiert, so dass sich eine Wellung vergrößert. Dadurch soll gewährleistet werden, dass der Dichtring auch dann noch mit einer gewissen Spannung am Nutgrund anliegt, wenn sich die zu verbindenden Teile etwas voneinander entfernen.

US 805 645 A zeigt einen weiteren Dichtring mit radial inneren und radial äußeren Randabschnitten, die auf einen Teil des übrigen Dichtrings zurück gebogen sind. Zwischen diesen beiden radial inneren und äußeren Randabschnitten sind mehrere Sicken vorgesehen, die über die Dicke der umgebogenen Randabschnitte im nicht eingebauten Zustand des Dichtringes hinausragen.

Der Erfindung liegt die Aufgabe zugrunde, eine Rohrverbindung der eingangs genannten Art anzugeben, bei der die Schelle einer geringeren thermischen Belastung ausgesetzt ist.

Dieser Dichtring hält zum einen sehr hohen Temperaturen stand, wie sie insbesondere bei Abgasrohren auftreten, ist aber dennoch im Bereich seiner Sicke elastisch. Diese Sicke nimmt nicht nur den Einspanndruck auf, sondern auch die axiale thermische Dehnung beider Rohre relativ zueinander, ohne sich vollständig eben zurückzuverformen. Diese Rückverformung wird dadurch verhindert, dass der zurückgebogene Randabschnitt als Anschlag für den zweiten Flansch des zweiten Rohres wirkt bzw. wirken und dadurch eine weitere Rückverformung der Sicke(n) verhindert bzw. verhindern. Die Elastizität der Sicke(n) bleibt mithin weitgehend erhalten und trägt zur Verringerung der thermischen Axialbelastung der Schelle durch thermische Dehnung der Rohre bei.

Der Randabschnitt ist erfindungsgemäß durch über den umfang verteilte Laschen gebildet, die sich leichter umbiegen lassen als ein durchgehend über den Umfang des übrigen Dichtungsabschnitts umgebördelter Randabschnitt des Dichtrings.

Die Sicke erstreckt sich vorzugsweise über den gesamten Umfang des Dichtrings. Sie kann daher durch ein einfaches Prägewerkzeug geformt werden.

Der erste Flansch begrenzt einen zur Längsmittelachse des ersten Rohres koaxialen, geschlossenen Ringraum mit dem ersten Rohr, wobei sich eine zweite Wand des ersten Flansches am freien Ende des ersten Rohres gleitend abstützt. Bei dieser Lösung bleibt der erste Flansch aufgrund der in dem Ringraum eingeschlossenen Luft relativ kühl. Der erste Flansch weitet sich mithin thermisch weniger stark auf, kann sich aber unter dem thermischen, radialen Aufweitungsdruck des ersten Rohres relativ zu diesem, unter Abstützung an der Schelle, radial nach innen biegen, da seine nicht am ersten Rohr angeschweißte Wand an dem freien Ende des ersten Rohres entlanggleitet, so dass der radiale Aufweitungsdruck des ersten Rohres durch die Verbiegung des ersten Flansches zum größten Teil aufgenommen wird, ohne sich vollständig auf die Schelle zu übertragen.

Vorzugsweise ist das freie Ende des ersten Rohres abgeschrägt. Auf dieser Schräge des ersten Rohres kann die zweite Wand des ersten Flansches unter dem radialen, thermischen Aufweitungsdruck leichter entlanggleiten.

Wenn sich die zweite Wand des ersten Flansches mit einer Rundung am freien Ende des ersten Rohres abstützt, kann die zweite Wand des ersten Flansches unter dem radialen Aufweitungsdruck noch leichter an der Schräge des ersten Rohres entlanggleiten.

Sodann kann dafür gesorgt sein, dass das zweite Rohr zwischen dem zweiten Flansch und seinem übrigen Rohrabschnitt einen elastisch biegsamen, zylindrischen Abschnitt aufweist. Durch eine radiale elastische Verbiegung des zylindrischen Abschnitts kann auch ein großer Teil des radialen Aufweitungsdrucks des zweiten Rohres aufgenommen werden. Gleichzeitig lässt die Elastizität des zylindrischen Abschnitts eine Abwinklung oder radiale Versetzung der beiden Rohre relativ zueinander zu, wenn sie aufgrund einer geringfügigen Fehlmontage nicht genau koaxial miteinander fluchten.

Ferner kann der Innendurchmesser des zylindrischen Abschnitts größer als der Außendurchmesser des ersten Rohres sein. Dies ermöglicht es, dass der zwischen dem zylindrischen Abschnitt und dem mit ihm verbundenen übrigen Rohrabschnitt des zweiten Rohres vorhandene Übergangsabschnitt des zweiten Rohres sich unter dem axialen thermischen Dehnungsdruck beider Rohre verbiegen kann und damit für einen axialen Dehnungsausgleich sorgt.

Vorzugsweise ist ferner dafür gesorgt, dass die Rundung der zweiten Wand des ersten Flansches in einen zylindrischen Fortsatz übergeht und der Innendurchmesser des zylindrischen Abschnitts des zweiten Rohres größer als der Außendurchmesser des Fortsatzes ist. Diese Ausbildung hat den Vorteil, dass sich ein Spalt oder Spiel zwischen dem zylindrischen Fortsatz der zweiten Wand des ersten Flansches ergibt, wobei der Fortsatz gleichzeitig einen zylindrischen Fortsatz des ersten Rohres bildet und das Zusammenstecken beider Rohre erleichtert, da das zweite Rohr auf dem Fortsatz geführt wird. Gleichzeitig lassen sich dadurch beide Rohre weitgehend zentrieren, wenn sie zunächst nicht koaxial zusammengeführt werden.

Günstig ist es ferner, wenn der Übergangsabschnitt zwischen dem zylindrischen Abschnitt und dem mit ihm verbundenen übrigen Rohrabschnitt des zweiten Rohres konisch ist. Die Konizität und Elastizität des übergangsabschnitts erleichtert ebenfalls eine radiale thermische Aufweitung des übrigen Rohrabschnitts des zweiten Rohres relativ zu seinem zylindrischen Abschnitt und dem zweiten Flansch, so dass der radiale thermische Aufweitungsdruck des zweiten Rohres auf die Schelle zum Teil auch durch den Übergangsabschnitt ausgeglichen wird.

Die Erfindung und ihre Weiterbildungen werden nachstehend anhand der beiliegenden Zeichnung eines bevorzugten Ausführungsbeispiels näher beschrieben. Darin stellen dar:
- Fig. 1: einen Ausschnitt eines Axialschnitts einer Verbindung zweier Rohre,
- Fig. 2: einen vergrößerten Ausschnitt der in Fig. 1 dargestellten Rohrverbindung,
- Fig. 3: ein vergrößertes Detail der Fig. 1,
- Fig. 4: eine Seitenansicht einer Schelle, die für die Verbindung nach Fig. 1 verwendet wird, in größerem Maßstab,
- Fig. 5: eine verkleinerte Seitenansicht des erfindungsgemäßen Dicht- rings der in den Fig. 1 und 2 dargestellten Verbindung,
- Fig. 6: einen vergrößerten Ausschnitt des Dichtrings nach Fig. 5 und
- Fig. 7: einen Querschnitt des Dichtrings nach Fig. 6.

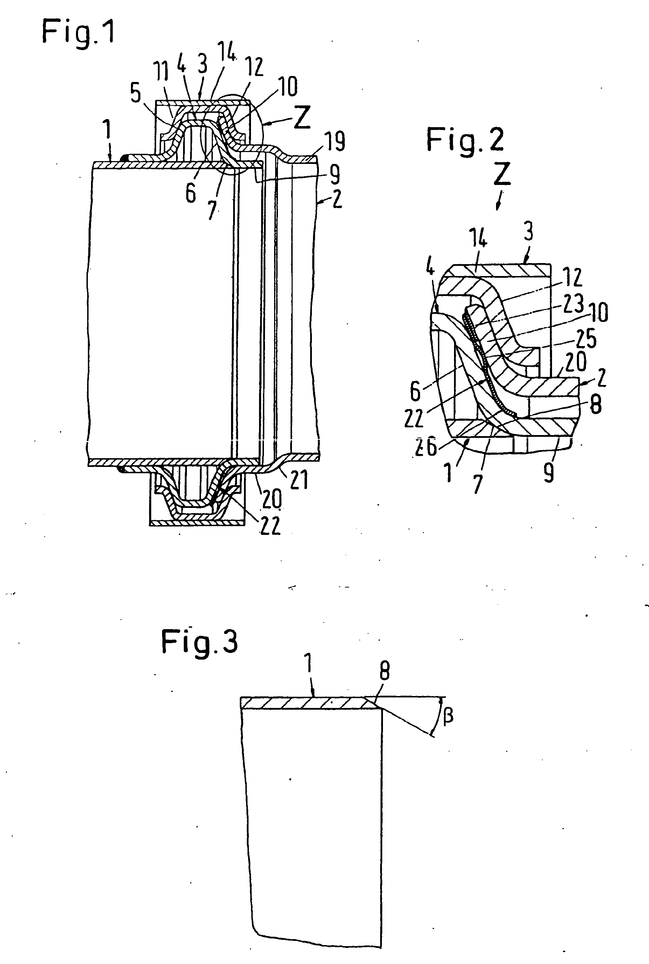

Die Verbindung in den Fig. 1 und 2 eines ersten Rohres 1 mit einem zweiten Rohr 2 mittels einer spannbaren Schelle 3 hat einen ersten Flansch 4 aus federndem Blech mit einer schrägen ersten Wand 5 und einer schrägen zweiten Wand 6. Die Wand 5 ist am Umfang des Rohres 1 angeschweißt. Die Wand 6 stützt sich mit einer Rundung 7 gleitend an einer Abschrägung 8 am freien Ende des Rohres 1 ab. Die Abschrägung 8 schließt mit der Axialrichtung des Rohres einen spitzen Winkel β von etwa 30° ein. Die Rundung 7 geht in einen zylindrischen Fortsatz 9 über, dessen Innen- und Außendurchmesser jeweils gleich dem Innen- und Außendurchmesser des Rohres 1 sind. Der Flansch 4 schließt daher .zusammen mit dem Rohr 1 einen mit Luft gefüllten Ringraum ab.

Ein Endabschnitt des zweiten Rohres 2 bildet einen zweiten Flansch 10.

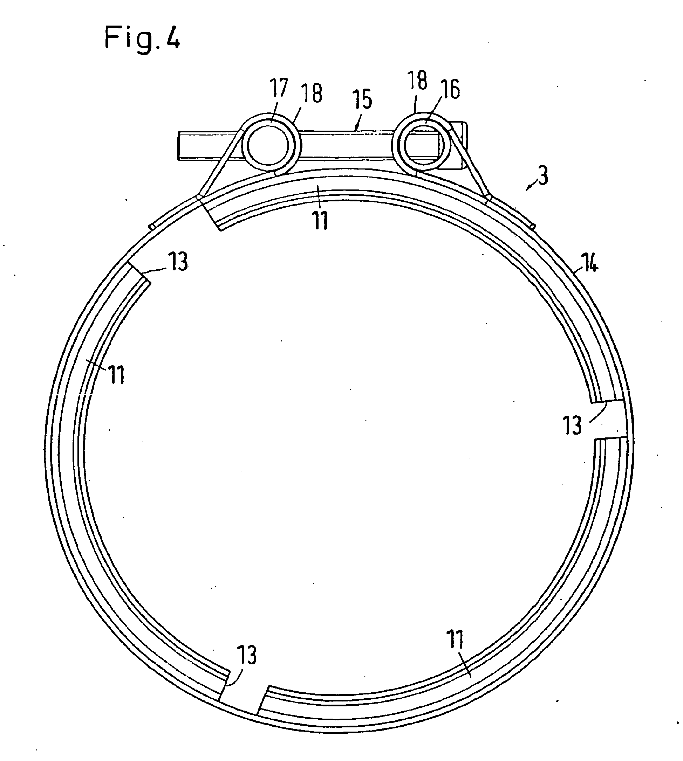

Die Schelle 3 übergreift die Flansche 4 und 10 und zieht mit konischen Seitenwänden 11 und 12, die in Umfangsrichtung in gleichen Winkelabständen Unterbrechungen 13 aufweisen (Fig. 4), um ein äußeres Spannband 14 und damit die gesamte Schelle flexibel zu halten, die beiden Flansche 4 und 10 beim Spannen zusammen. Die Schelle 3 wird mittels einer Schraube 15 gespannt. Die Schraube 15 ist durch koaxiale Löcher in einer Gelenkhülse 16 hindurchgeführt und durch koaxiale Gewindelöcher in einer Gelenkhülse 17 hindurchgeschraubt. Die Gelenkhülsen 16, 17 sind von Schlaufen 18 umgeben, die durch zurückgebogene Endabschnitte des Spannbands 14 gebildet sind. Die zurückgebogenen Enden der Schlaufen 18 sind am übrigen Teil des Spannbandes 14 angeschweißt. Die Spannschraube 15 ist durch Schlitze in den Schlaufen hindurchgeführt.

Das zweite Rohr 2 hat zwischen dem zweiten Flansch 10 und seinem übrigen Rohrabschnitt 19 einen elastisch biegsamen zylindrischen Abschnitt 20, dessen Innendurchmesser größer als der Außendurchmesser des ersten Rohres 1 und des zylindrischen Fortsatzes 9 ist. Ein Übergangsabschnitt 21 (Fig. 1) zwischen dem zylindrischen Abschnitt 20 und dem übrigen Rohrabschnitt 19 des Rohres 2 ist konisch und ebenfalls elastisch biegsam.

Zwischen den beiden Flanschen 4 und 10 ist ein Dichtring 22 aus federndem Stahlblech im gespannten Zustand der Schelle 3 eingeklemmt.

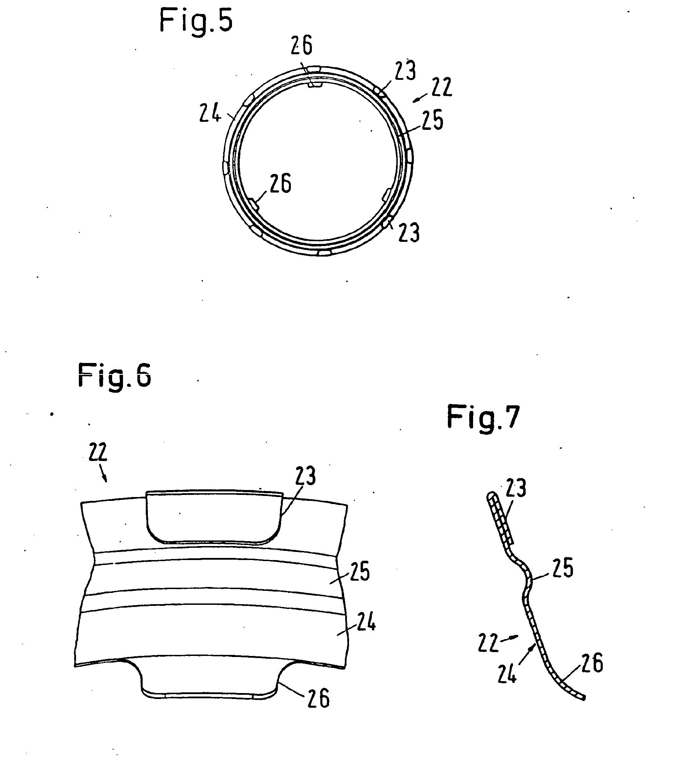

Wie die Fig. 2 und 5 bis 7 deutlicher zeigen, sind acht Randabschnitte 23 in Form von Laschen auf einen Teil des übrigen Dichtringabschnitts 24 zurückgebogen. Der übrige Dichtringabschnitt 24 hat eine über die Dicke der umgebogenen Randabschnitte 23 im ungespannten Zustand der Schelle hinausragende Sicke 25, die sich über den gesamten Umfang des Dichtrings 22 erstreckt. Der radial innere Rand des Dichtrings 22 ist mit drei entsprechend der Rundung 7 gekrümmten Angleichungslaschen 26 in gleichen Umfangsabständen versehen.

Nachstehend werden die Wirkungsweise und Vorteile des dargestellten Ausführungsbeispiels näher beschrieben.

Durch die in dem Ringraum zwischen dem ersten Flansch 4 und dem Rohr 1 eingeschlossene Luft bleibt der Flansch 4 relativ kühl, wenn ein heißes Fluid, wie heiße Abgase, durch die Rohre 1 und 2 geleitet wird. Der erste Flansch 4 weitet sich mithin in radialer Richtung thermisch weniger stark auf als wenn er unmittelbar mit dem heißen Fluid in Berührung kommt. Er kann sich aber unter dem thermischen, radialen Aufweitungsdruck des Rohres 1 unter Abstützung an der Schelle 3 radial nach innen biegen, da seine nicht am Rohr 1 angeschweißte Wand 6 an dem freien Ende des Rohres 1 entlanggleitet, so dass der radiale Aufweitungsdruck des Rohres 1 durch die Verbiegung des Flansches 4 zum größten Teil aufgenommen wird, ohne sich vollständig auf die Schelle 3 zu übertragen. Hierzu trägt insbesondere die Abschrägung 8 des Rohres 1 bei, weil die Wand 6 des Flansches 4 unter dem radialen, thermischen Aufweitungsdruck und der diesem entgegenwirkenden Schelle 3 an der Abschrägung 8 leichter entlanggleiten kann. Die Rundung 7 der Wand 6 des Flansches 4 erleichtert zusätzlich das Entlanggleiten der Wand 6 an der Abschrägung 8.

Der elastische zylindrische Abschnitt 20 hat den Vorteil, dass er sich unter dem thermischen Aufweitungsdruck im zweiten Rohr 2 verbiegt und somit ebenfalls einen großen Teil des Aufweitungsdrucks aufnimmt. Gleichzeitig lässt die Elastizität des zylindrischen Abschnitts 20 eine Abwinklung oder radiale Versetzung der beiden Rohre 1, 2 relativ zueinander zu, wenn sie aufgrund einer geringfügigen Fehlmontage nicht genau koaxial miteinander fluchten.

Da der Innendurchmesser des zylindrischen Abschnitts 20 größer als der Außendurchmesser des ersten Rohres 1 ist, kann sich der zwischen dem zylindrischen Abschnitt 20 und dem mit ihm verbundenen übrigen Rohrabschnitt 19 des Rohres 2 vorhandene Übergangsabschnitt 21 des Rohres 2 unter dem axialen thermischen Dehnungsdruck beider Rohre 1, 2 verbiegen und damit für einen axialen Dehnungsausgleich sorgen.

Der zylindrische Fortsatz 9 der Rundung 7 der zweiten Wand 6 des Flansches 4 hat den Vorteil, dass sich ein Spalt oder Spiel zwischen dem zylindrischen Fortsatz 9 der Wand 6 des ersten Flansches 4 und dem zylindrischen Abschnitt 20 ergibt, wobei der Fortsatz 9 gleichzeitig einen zylindrischen Fortsatz des Rohres 1 bildet und das Zusammenstecken beider Rohre erleichtert, da das Rohr 2 auf dem Fortsatz 9 geführt wird. Gleichzeitig lassen sich dadurch beide Rohre 1, 2 weitgehend zentrieren, wenn sie zunächst nicht koaxial zusammengeführt werden.

Die Konizität und Elastizität des Übergangsabschnitts 21 erleichtert ebenfalls eine radiale thermische Aufweitung des übrigen Abschnitts 19 des Rohres 2 relativ zu seinem zylindrischen Abschnitt 20 und dem zweiten Flansch 12, so dass der radiale, thermische Aufweitungsdruck des Rohres 2 auf die Schelle 3 zum Teil auch durch den Übergangsabschnitt 21 ausgeglichen wird.

Der aus Stahlblech bestehende Dichtring 22 hält zum einen hohen Temperaturen stand, wie sie insbesondere bei Abgasrohren auftreten, ist aber dennoch im Bereich seiner Sicke 25 elastisch. Diese Sicke 25 nimmt nicht nur den Einspanndruck der Schelle 3 auf, sondern teilweise auch die axiale thermische Dehnung beider Rohre 1, 2 relativ zueinander, ohne sich vollständig eben zurückzuverformen. Diese Rückverformung wird dadurch verhindert, dass die zurückgebogenen Randabschnitte 23 bzw. Laschen als Anschlag für den zweiten Flansch 10 des Rohres 2 wirken. Die Elastizität der Sicke 25 bleibt mithin weitgehend erhalten. Einzelne erfindungsgemäße Randabschnitte 23 in Form von Laschen lassen sich leichter umbiegen als ein durchgehend über den Umfang des übrigen Dichtringabschnitts 24 umgebördelter Randabschnitt des Dichtrings 22.

Die Sicke 25 erstreckt sich vorzugsweise über den gesamten Umfang des Dichtrings 22. Sie kann daher durch ein einfaches Prägewerkzeug geformt werden. Alternativ wäre es aber auch möglich, die Sicke 25 in einzelne Sicken aufzuteilen oder radiale, über den Umfang des Dichtrings 22 verteilte Sicken vorzusehen. Diese hätten jedoch insgesamt eine höhere Steifigkeit als die sich über den gesamten Umfang des übrigen Dichtringabschnitts 24 erstreckende Sicke 25.

## Patentansprüche

1. Dichtring für eine Verbindung zweier Rohre (1, 2), von denen ein erstes Rohr (1) einen ersten Flansch (4) und ein zweites Rohr (2) einen zweiten Flansch (10) aufweist, mit einer die Flansche (4, 10) übergreifenden, spannbaren Schelle (3), die konische Seitenwände (11, 12) aufweist, durch die die Flansche (4, 10) beim Spannen der Schelle (3) axial zueinander hin gedrückt werden, wobei der Dichtring zwischen den Flanschen (4, 10) angeordnet wird, wobei der Dichtring (22) ein elastisches Stahlband mit einem Randabschnitt (23) aufweist, der auf einen Teil des übrigen Dichtringabschnitts (24) zurückgebogen ist, und wobei der übrige Dichtringabschnitt (24) wenigstens eine über die Dicke des umgebogenen Randabschnitts (23) im ungespannten Zustand der Schelle (3) hinausragende Sicke (25) aufweist, **dadurch gekennzeichnet, dass** der Randabschnitt (23) durch über den Umfang verteilte Laschen gebildet ist.

2. Dichtring nach Anspruch 1, **dadurch gekennzeichnet, dass** die Sicke (25) sich über den gesamten Umfang des Dichtrings (22) erstreckt.

## Claims

1. A sealing ring for a connection of two pipes (1, 2), a first pipe (1) of which having a first flange (4) and a second pipe (2) having a second flange (10), a tightenable clamp (3) engaging across the first and second flanges (4, 10) and having conical sidewalls (11, 12) forcing the first and second flanges (4, 10) axially against one another when the clamp (3) is tightened, the sealing ring (22) being arranged between the flanges (4, 10), wherein the sealing ring is in form of an elastic sheet steel strap having an edge section (23) which is bent back onto a portion of the remaining sealing ring section (24), and wherein the remaining sealing ring section (24) has at least one corrugation (25) that projects past a thickness of the bent edge section (23) in an untightened state of the clamp (3), **characterized in that** the edge section (23) is formed by tabs distributed about the circumference.

2. The connection according to claim 1, **characterized in that** the corrugation (25) extends about the entire circumference of the sealing ring (22).

## Revendications

1. Bague d'étanchéité conçue pour un raccordement de deux tubes (1, 2), parmi lesquels un premier tube (1) est muni d'une première bride (4) et un second tube (2) est muni d'une seconde bride (10), comportant un collier de serrage (3) apte au blocage, qui coiffe les brides (4, 10) et présente des parois latérales tronconiques (11, 12) par lesquelles lesdites brides (4, 10) sont poussées axialement l'une en direction de l'autre lors du blocage dudit collier de serrage (3), la bague d'étanchéité étant interposée entre les brides (4, 10), ladite bague d'étanchéité (22) offrant un ruban d'acier élastique pourvu d'une région marginale (23) rabattue sur une partie de la région restante (24) de ladite bague d'étanchéité, et ladite région restante (24) de la bague d'étanchéité étant dotée d'au moins une moulure (25) faisant saillie au-delà de l'épaisseur de ladite région marginale repliée (23), à l'état non bloqué dudit collier de serrage (3), **caractérisée par le fait que** la région marginale (23) est formée par des pattes réparties sur le pourtour.

2. Bague d'étanchéité selon la revendication 1, **caractérisée par le fait que** la moulure (25) s'étend sur l'intégralité du pourtour de ladite bague d'étanchéité (22).
